## Europäisches Patentamt

## European Patent Office

## Office européen des brevets

(19)

(11) Veröffentlichungsnummer: **0 219 722 B1**

(12)

# EUROPÄISCHE PATENTSCHRIFT

(45) Veröffentlichungstag der Patentschrift:
**07.12.88**

(51) Int. Cl.⁴: **F 23 R 3/06**

(21) Anmeldenummer: **86113380.9**

(22) Anmeldetag: **29.09.86**

(54) **Brennkammer für ein Gasturbinentriebwerk, insbesondere Ringbrennkammer, mit mindestens einer Luftzufuhrbuchse.**

(30) Priorität: **04.10.85  DE 3535443**

(43) Veröffentlichungstag der Anmeldung:
**29.04.87 Patentblatt 87/18**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**DE-A- 1 933 821**
**GB-A- 1 219 665**
**US-A- 3 007 312**
**US-A- 3 874 169**
**US-A- 3 934 408**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Mink, Paul, Kleiststrasse 12, D-8060 Dachau (DE)**

ACTORUM AG

## Beschreibung

Die Erfindung bezieht sich auf eine Brennkammer nach dem Oberbegriff des Patentanspruchs 1.

Luftzufuhrbuchsen sind bei derartigen Brennkammern erforderlich, um beispielsweise den Verbrennungs- Misch- oder Kühlluftbedarf im Hinblick auf die verschiedenen Reaktionszonen in der Brennkammer gänzlich oder teilweise bereitzustellen.

Die Luftzufuhrbuchsen müssen dabei so angeordnet sein, dass trotz Doppelwandigkeit der Flammrohrstruktur ein hinsichtlich Menge und Geschwindigkeit unbehinderter Luftdurchsatz vom äusseren Sekundärluftkanal — zwischen Flammrohr und Brennkammeraussengehäuse — in die verschiedenen Reaktionszonen ermöglicht wird.

Bei aus der DE-A-1 933 821 oder aus der DE-A-2 913 223 bekannten Brennkammern nach der eingangs genannten Art sind die Luftzufuhrbuchsen fest in die Flammrohrstruktur integriert und dabei z.B. mit der Flammrohrstruktur verschweisst oder — wie im Falle der DE-A-2 913 223 zusätzlich erwähnt und dargestellt — an der äusseren Flammrohrwand unter Zulassung eines kombinierten Axial-Radial-Spiels praktisch unlösbar aufgehängt.

Bei einer doppelwandigen Flammrohrstruktur sind die betreffenden Innenwandabschnitte und auch die insbesondere im Innenwandabschnittsbereich liegenden Endabschnitte der Luftbuchsen einer vergleichsweise hohen Temperatur- bzw. Temperaturwechselbeanspruchung aus dem Verbrennungsprozess ausgesetzt mit damit verbundener Heissgasabbrand- bzw. -Korrosionsgefahr.

Da ein Herauslösen einer oder mehrerer beschädigter Luftbuchsen aus den genannten Befestigungsgründen praktisch ausgeschlossen ist, erzwingt dies — sofern überhaupt möglich — einen Austausch von zugehörigen Flammrohrwandteilen, im Extremfall zum Austausch der gesamten Brennkammer.

Eine örtliche Reparatur einer beschädigten Luftbuchse scheidet aus Sicherheitsgründen meistens aus, abgesehen von dem damit verbundenen Kosten- und Zeitaufwand.

Die zuletzt genannten Mängel gelten sinngemäss auch dann, wenn z.B. die Luftbuchsen intakt, hingegen aber Flammrohrstrukturen beschädigt sind, indem man also gezwungen wäre, beschädigte Flammrohrstrukturen oder das gesamte Flammrohr zu ersetzen, ohne die intakten Buchsen wieder einsetzen zu können.

Mit fest in die Doppelwandstruktur eingesetzten Buchsen ergeben sich Montage- und Demontagegeschwindigkeiten, insbesondere auch dann, wenn — wie bei neuzeitlichen Ringbrennkammern von Gasturbinentriebwerken angestrebt — die inneren, dem Heiss- bzw. Brenngasstrom ausgesetzten Flammrohrpartien aus sich in Kammerlängsrichtung erstreckenden, schindel- oder schuppenartig abgestuften Segmenten ausgebildet sein soll; und zwar insbesondere dann, wenn die Segmente oder Streifenelemente aus den ihnen eigenen Montage- oder Wärmespannungsgründen in axialer Richtung in die als äussere oder innere Tragkörper ausgebildeten Flammrohrpartien eingeschoben oder aus diesen herausgezogen bzw. daran aufgehängt werden sollen.

Der Erfindung liegt die Aufgabe zugrunde, eine in Relation zur jeweils vorgegebenen Flammrohrdoppelwandstruktur leicht auswechselbare bzw. äusserst einfach montier- oder demontierbare Luftzufuhrbuchse zu schaffen.

Durch die im Kennzeichnungsteil des Patentanspruchs 1 enthaltenen Merkmale ist die gestellte Aufgabe erfindungsgemäss gelöst.

Auf diese Weise kann die betreffende Luftzufuhrbuchse ohne besondere Fügevorkehrungen einfachst von Hand in die betreffenden Öffnungen des äusseren und inneren Flammrohrabschnitts einer doppelwandigen Flammrohrstruktur eingesetzt und ebenso leicht wieder aus den Öffnungen herausgezogen werden.

Vorteilhafte Ausgestaltungen des Erfindungsgegenstandes gehen aus den Patentansprüchen 2 bis 6 hervor.

Anhand der Zeichnungen ist die Erfindung beispielsweise weiter erläutert; es zeigen:

Fig. 1 einen Mittellängsschnitt einer zwischen äusseren und inneren Flammrohrabschnitten eingesetzten Luftzufuhrbuchse und

Fig. 2 einen Schnitt gemäss A-A der Fig. 1, jedoch in vergrössertem Massstab.

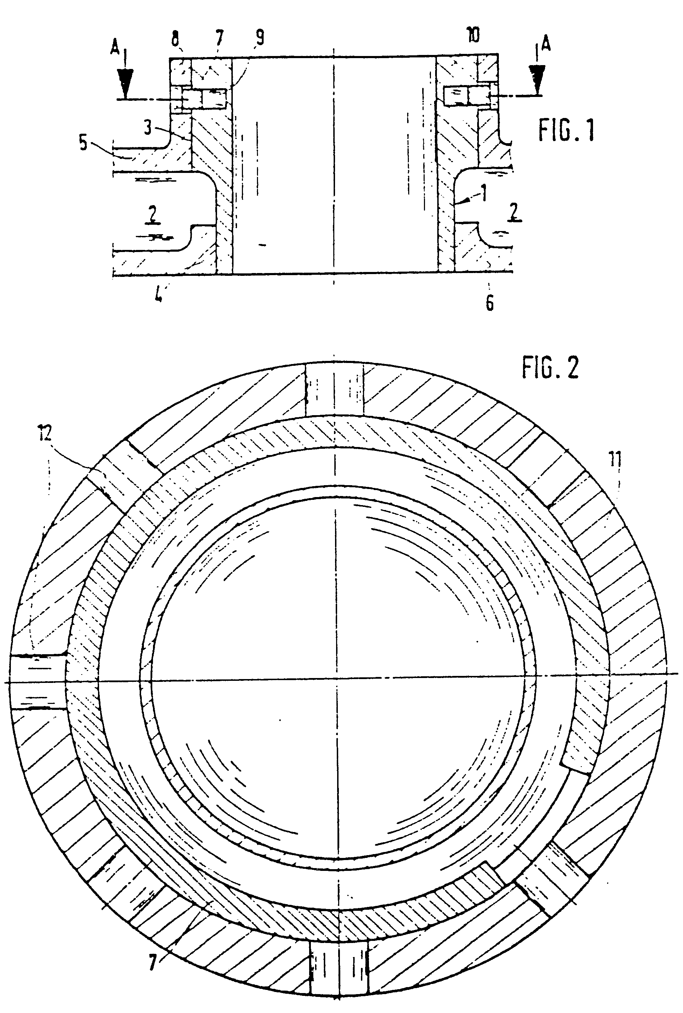

Fig. 1 und 2 veranschaulichen eine für eine Ringbrennkammer eines Gasturbinentriebwerks vorgesehene Luftzufuhrbuchse 1, die unter radialer Überbrückung eines Zwischenraumes 2 einer doppelwandigen Flammrohrstruktur in achssymmetrisch einander zugeordnete Öffnungen 3, 4 eines äusseren 5, und inneren Flammrohrabschnitts 6 eingesetzt ist; erfindungsgemäss weist die Luftzufuhrbuchse 1 ein ringförmiges Federglied 7 auf, welches beim Einsetzen zusammengedrückt ist und nach Erreichen der Betriebsendstellung der Buchse 1 in eine am Öffnungsrand des hier äusseren Flammrohrabschnitts 5 angeordnete Umfangsnut 8 auffedert. Um die Luftzufuhrbuchse 1 unbehindert einsetzen zu können, soll das als Sicherungsring ausgebildete Federglied 7 innerhalb einer Umfangsnut 9 eines Buchsenendteils 10 vollständig versenkbar angeordnet sein und bei vollständiger Auffederung — wie in Fig. 1 gezeigt — die gegenseitig offenen Umfangsnuten 8, 9 an der Buchse 1 und am Flammrohröffnungsrand je zur Hälfte überdecken.

Das Buchsenendteil 10 stellt dabei einen rotationssymmetrisch aufgeweiteten Zentrierabschnitt dar, der in einen kragenförmigen, die Öffnung 3 des äusseren Flammrohrabschnitts 5 enthaltenden Absatz 11 (Fig. 2) passt, der hier über dem Umfang gleichförmig verteilte, von aussen zugängliche Durchgangsbohrungen 12 zur vollständigen Zusammendrückung des Federglieds 7 aufweist.

Vorteilhafterweise sollte grundsätzlich der kragenförmige Absatz 11 Bestandteil des äusseren Flammrohrabschnitts 5 sein.

In weiterer Ausgestaltung kann die Luftzufuhrbuchse 1 aus einem ingenieurkeramischen, temperaturbeständigen Werkstoff mit dieser Wärmedehnzahl gefertigt sein, z.B. aus Siliziumnitrid oder Siliziumkarbid, und zwar im Interesse geringer Verschleissanfälligkeit sowie im Interesse einer möglichst engen Spielpassung ohne starke Verklemmungsgefahr.

Der Erfindungsgegenstand ist ferner vorteilhaft bei neuzeitlichen Ringbrennkammern einsetzbar, bei denen der äussere Flammrohrabschnitt 5 Bestandteil einer Flammrohrtragkörperstruktur, der innere Flammrohrabschnitt 6 Bestandteil von in axialer Richtung an der Tragkörperstruktur festlegbaren, in Kammerlängsrichtung schindel- oder schuppenartig abgestuft ausgebildeten Auskleidungsstreifen ist; hierbei kann die Luftzufuhrbuchse 1 nach dem Einschieben der jeweils inneren Streifen 6 leicht eingesetzt oder, vor dem Herausziehen derselben, durch Lösen der Federsicherung aus den Öffnungen 3, 4 leicht entfernt werden.

Zweckmässig soll die Luftzufuhrbuchse 1 mit Axial- und Radialspiel in die betreffenden Flammrohröffnungen 3, 4 eingesetzt werden, um nicht nur eine einfache Montage oder Demontage zu gewährleisten, sondern auch, um unbehinderte radiale Dehnungsbewegungen der Brennkammer bzw. der Flammrohrabschnitte 5, 6 sowie gegebenenfalls auftretende Differenzdehnungen dieser Abschnitte in Achs- und Umfangsrichtung ohne Buchsenverklemmungsgefahr zu beherrschen.

## Patentansprüche

1. Brennkammer für Gasturbinentriebwerke, insbesondere Ringbrennkammer, mit mindestens einer Luftzufuhrbuchse, die unter radialer Überbrückung einer doppelwandigen Flammrohrstruktur in achssymmetrisch einander zugeordnete Öffnungen eines äusseren und inneren Flammrohrabschnitts eingesetzt ist, dadurch gekennzeichnet, dass die Luftzufuhrbuchse (1) ein ringförmiges Federglied (7) aufweist, welches beim Einsetzen zusammengedrückt wird und nach Erreichen der Betriebsendstellung der Buchse in eine am Öffnungsrand des einen der beiden Flammrohrabschnitte (5) angeordnete Umfangsnut (8) auffedert.

2. Brennkammer nach Anspruch 1, dadurch gekennzeichnet, dass das als Sicherungsring ausgebildete Federglied (7) innerhalb einer Umfangsnut (9) eines Buchsenendteils (10) vollständig versenkbar angeordnet ist und bei vollständiger Auffederung die gegenseitig offenen Umfangsnuten (9, 8) an der Buchse und am Flammrohröffnungsrand je zur Hälfte überdeckt.

3. Brennkammer nach Anspruch 1 oder 2, dadurch gekennzeichnet, dass das Buchsenendteil (10) ein rotationssymmetrisch aufgeweiteter Zentrierabschnitt ist, der in einen kragenförmigen, die Öffnung (3) des einen Flammrohrabschnitts (5) enthaltenen Absatz (11) passt, der über dem Umfang verteilte, von aussen zugängliche Durchgangsbohrungen (12) zur vollständigen Zusammendrückung des Federgliedes (7) aufweist.

4. Brennkammer nach Anspruch 3, dadurch gekennzeichnet, dass der kragenförmige Absatz (11) Bestandteil des äusseren Flammrohrabschnitts (5) ist.

5. Brennkammer nach einem oder mehreren der Ansprüche 1 bis 4, dadurch gekennzeichnet, dass die Luftzufuhrbuchse aus einem ingenieurkeramischen, temperaturbeständigen Werkstoff mit niedriger Wärmedehnzahl gefertigt ist.

6. Brennkammer nach einem oder mehreren der Ansprüche 1 bis 5, wobei der äussere Flammrohrabschnitt (5) Bestandteil einer Flammrohrtragkörperstruktur, der innere Flammrohrabschnitt (6) Bestandteil von in axialer Richtung an der Tragkörperstruktur festlegbaren, in Kammerlängsrichtung schindeloder schuppenartig abgestuft ausgebildeten Auskleidungsstreifen ist, dadurch gekennzeichnet, dass die Luftzufuhrbuchse (1) nach dem Einschieben der jeweils inneren Streifen (6) eingesetzt oder, vor dem Herausziehen derselben, durch Lösen der Federsicherung aus den Öffnungen(3, 4) entfernt wird.

## Claims

1. Combustion chamber for gas turbine propulsion units, particularly an annular combustion chamber, comprising at least one air supply nozzle which, while radially bridging a double-walled flame tube structure, is inserted into axially symmetrically associated apertures in an outer and inner flame tube portion, characterised in that the air supply nozzle (1) comprises an annular spring member (7) which is compressed upon insertion and which, once the final operative position of the nozzle is reached, springs open into a peripheral groove (8) disposed at the opening edge of one of the two flame tube portions (5).

2. Combustion chamber according to Claim 1, characterised in that the spring member (7) which is constructed as a locking ring is disposed to be completely retractable into a peripheral groove (9) on an end part (10) of the nozzle and which, when completely opened out, masks one half each of the mutually open peripheral grooves (9, 8) on the nozzle and on the opening edge of the flame tube.

3. Combustion chamber according to Claim 1 or 2, characterised in that the end part (10) of the nozzle is a rotationally symmetrically widened out centring portion which fits into a collar-shaped member (11) containing the opening (3) of one portion (5) of the flame tube comprising, distributed over the periphery and accessible from outside, through bores (12) for complete compression of the spring member (7).

4. Combustion chamber according to Claim 5, characterised in that the collar-shaped member (11) is a constituent part of the outer flame tube portion (5).

5. Combustion chamber according to one or more of Claims 1 to 4, characterised in that the air supply nozzle is made from an industrial ceramic temperature-resistant material with a low heat expansion coefficient.

6. Combustion chamber according to one or more of Claims 1 to 5, the outer flame tube portion (5) being a constituent part of a flame tube supporting structure while the inner flame tube portion (6) is a constituent part of lining strips constructed in such a way as to be stepped like scales or roofing slates in the longitudinal direction of the chamber and adapted to be fixed on the supporting structure in an axial direction, characterised in that the air supply nozzle (1) is inserted after whichever are the inner strips (6) have been pushed in or, prior to withdrawal thereof, is removed from the apertures (3, 4) by slackening of the spring locking means.

## Revendications

1. Chambre de combustion pour propulseurs à turbines à gaz, notamment chambre de combustion annulaire avec au moins un manchon d'arrivée d'air qui, par superposition radiale d'une structure de tubes de flammes à double paroi, est mise en place dans des ouvertures disposées co-axialement l'une par rapport à l'autre d'une partie externe et d'une partie interne de tubes de flamme, chambre de combustion caractérisée en ce que le manchon d'arrivée d'air (1) comporte un organe élastique de forme annulaire (7) qui est resserré lors de la mise en place du manchon et qui, après que le manchon ait atteint sa position finale de fonctionnement, se détend dans une gorge périphérique (8) disposée au bord de l'ouverture de l'une des deux parties du tube de flamme (5).

2. Chambre de combustion selon la revendication 1, caractérisée en ce que l'organe élastique (7) revêtant la forme d'un anneau d'arrêt est disposé de façon à pouvoir s'escamoter complètement à l'intérieur d'une gorge périphérique (9) d'une partie terminale (10) du manchon et que lors de cette détente complète, il recouvre respectivement par moitié les gorges périphériques ouvertes en sens inverse (9, 8) sur le manchon et sur le bord de l'ouverture du tube de flamme.

3. Chambre de combustion selon la revendication 1 ou 2, caractérisée en ce que la partie terminale (10) du manchon est une partie de centrage élargie présentant une symétrie de révolution qui s'ajuste dans une partie (11) contenant l'ouverture (3) de l'une des parties (5) du tube de flamme et qui comporte des perçages traversants (12), répartis sur sa périphérie et accessible de l'extérieur, pour permettre de resserrer complètement l'organe élastique (7).

4. Chambre de combustion selon la revendication 3, caractérisée en ce que la partie en forme de collerette (11) est une partie constitutive de la partie extérieure (5) du tube de flamme.

5. Chambre de combustion selon une ou plusieurs des revendications 1 à 4, caractérisée en ce que le manchon d'arrivée d'air est réalisé à partir de matériaux céramiques résistant à la température avec un coefficient de dilatation thermique réduit.

6. Chambre de combustion selon une ou plusieurs des revendications 1 à 5, dans laquelle la partie extérieure (5) du tube de flamme est une partie constitutive d'une structure porteuse du tube de flamme, la partie intérieure (6) du tube de flamme étant une partie constitutive de bandes de revêtement, réalisée de façon échelonnée sous forme de bardeaux d'écailles en direction longitudinale de la chambre et susceptible d'être fixée sur la structure porteuse, chambre de combustion caractérisée en ce que le manchon d'arrivée d'air (1) après l'emboîtage des bandes internes respectives (6) est mis en place ou bien, avant le retrait de ces bandes, est enlevé des ouvertures (3, 4) en supprimant l'arrêt élastique.

FIG. 1

FIG. 2